# EUROPEAN PATENT APPLICATION

(11) **EP 4 821 891 A1**
(43) Date of publication of application: **14.10.2026**
(21) Application number: 24900297.3
(22) Date of filing: 16.10.2024
(51) Int. Cl.: C01G 31/00, H01M 4/485

(54) **LITHIUM VANADIUM OXIDE, NEGATIVE ELECTRODE ACTIVE MATERIAL, AND BATTERY**

(30) Priority: 05.12.2023 JP 2023205701
(71) Applicant: Panasonic Intellectual Property Management Co., Ltd., Kadoma-shi, Osaka 571-0057 (JP)
(72) Inventor: SHINODA, Kaori, Kadoma-shi, Osaka 571-0057 (JP); TANAKA, Yoshiaki, Kadoma-shi, Osaka 571-0057 (JP); MIYAZAKI, Akinobu, Kadoma-shi, Osaka 571-0057 (JP)
(74) Representative: Grünecker Patent- und Rechtsanwälte PartG mbB
(86) International application number: PCT/JP2024/036755
(87) International publication number: WO 2025/121001

(57) **Abstract**

The lithium vanadium oxide of the present disclosure is a lithium vanadium oxide including Li, V, M, and O, wherein M is at least one selected from tetravalent metal elements excluding V and tetravalent metalloid elements, and the lithium vanadium oxide includes both a β-phase and a γ-phase as crystal phases.

## Description

### Technical Field

The present disclosure relates to a lithium vanadium oxide, a negative electrode active material, and a battery.

### Background Art

PTL 1 discloses a nonaqueous secondary battery including Li₃VO₄ as a negative electrode active material.

PTL 2 discloses a co-fired all-solid battery including a negative electrode active material obtained by doping Li₃VO₄ with A element and/or B element. The A element is at least one element selected from the group consisting of Mg, Al, Ga, and Zn. The B element is at least one element selected from the group consisting of Zn, Al, Ga, Si, Ge, P, and Ti. The negative electrode active material includes a crystal phase that is either a β-phase or a γ-phase.

### Citation List

### Patent Literature

PTL 1: Japanese Unexamined Patent Application Publication No. 2008-77847
PTL 2: International Publication No. WO 2019/044902

### Summary of Invention

### Technical Problem

When a lithium vanadium oxide is doped with a metal element, the coefficient of expansion and contraction of the lithium vanadium oxide is increased, or the theoretical capacity of the lithium vanadium oxide decreases. An increase in the coefficient of expansion and contraction reduces the durability of the battery including the lithium vanadium oxide. A decrease in the theoretical capacity decreases the capacity of the battery including the lithium vanadium oxide.

The present disclosure provides a technology for achieving both the capacity and the durability of a battery including a lithium vanadium oxide as an active material. Solution to Problem

The present disclosure provides:
a lithium vanadium oxide containing Li, V, M, and O, wherein
M is at least one selected from tetravalent metal elements excluding V and tetravalent metalloid elements, and
the lithium vanadium oxide includes both a β-phase and a γ-phase as crystal phases.

### Advantageous Effects of Invention

According to the present disclosure, both the capacity and the durability of a battery including a lithium vanadium oxide as an active material can be achieved.

### Brief Description of Drawings

[Fig. 1] Fig. 1 is a schematical cross-sectional view illustrating an electrode material of a second embodiment.
[Fig. 2] Fig. 2 is a schematical cross-sectional view illustrating an example of the structure of a battery of a third embodiment.
[Fig. 3] Fig. 3 is a schematic cross-sectional view illustrating another example of the structure of a battery of the third embodiment.
[Fig. 4] Fig. 4 is a graph showing X-ray diffraction patterns of Example 1, Comparative Example 1, and Comparative Example 2.
[Fig. 5] Fig. 5 is a graph showing changes in the discharge capacity retention rate during charge-discharge cycles in Examples 1 to 3 and Comparative Example 1. Description of Embodiments

### (Underlying Knowledge Forming Basis of the Present Disclosure)

A lithium vanadium oxide may have either a β-phase or a γ-phase. A battery including a lithium vanadium oxide having a β-phase as an active material has a large capacity. However, the coefficient of expansion and contraction of the active material due to insertion and extraction of Li in the β-phase is high, which is disadvantageous from the viewpoint of the durability of a battery. The coefficient of expansion and contraction of an active material including a lithium vanadium oxide having a γ-phase is low, which is advantageous from the viewpoint of the durability of a battery. However, the theoretical capacity is decreased by doing a lithium vanadium oxide with a metal element. A decrease in the theoretical capacity makes it difficult to obtain a battery with a high capacity.

The present inventors have found that both a β-phase and a γ-phase can present under specified conditions and have arrived at the present disclosure.

Embodiments of the present disclosure will now be described with reference to the drawings. The present disclosure is not limited to the following embodiments.

### (First embodiment)

The lithium vanadium oxide according to a first embodiment contains Li, V, M, and O. Here, M is at least one selected from tetravalent metal elements excluding V and tetravalent metalloid elements. The lithium vanadium oxide includes both a β-phase and a γ-phase as crystal phases.

The β-phase is a crystal phase having a crystal structure belonging to a space group Pmn2₁. Specifically, the crystal structure of the β-phase includes a tetrahedron composed of LiO₄ (hereinafter, simply referred to as "LiO₄ tetrahedron") and a tetrahedron composed of VO₄ (hereinafter, simply referred to as "VO₄ tetrahedron"). In the crystal structure of the β-phase, the LiO₄ tetrahedron and the VO₄ tetrahedron are oriented in the same direction (in the c-axis direction which is one side of a crystal lattice) in a state in which adjacent tetrahedrons share a vertex. The β-phase has a high theoretical capacity as an active material. At the same time, the β-phase has a high coefficient of expansion and contraction due to insertion and extraction of Li in the crystal phase.

The γ-phase is a crystal phase having a crystal structure belonging to a space group Pcmn. Specifically, the crystal structure of the γ-phase includes an LiO₄ tetrahedron and a VO₄ tetrahedron as in the crystal structure of the β-phase. In the LiO₄ tetrahedron and the VO₄ tetrahedron of the γ-phase, there are tetrahedrons roughly oriented in one direction (the +c-axis direction which is one side of the crystal lattice) and tetrahedrons roughly oriented in a direction opposite to the above direction (the -c-axis direction which is one side of the crystal lattice) in roughly half and half proportions. In the crystal structure of the γ-phase, the LiO₄ tetrahedron shares the vertex and one side of its tetrahedron with the adjacent LiO₄ tetrahedron, and the VO₄ tetrahedron shares the vertex of its tetrahedron with the adjacent LiO₄ tetrahedron or VO₄ tetrahedron. The γ-phase can be stably obtained by partially substituting the V (vanadium) site in the crystal lattice with a tetravalent metal other than V. The coefficient of expansion and contraction of the γ-phase due to the insertion and extraction of Li in the crystal phase is low. At the same time, the γ-phase decreases the theoretical capacity of the lithium vanadium oxide as an active material.

In the lithium vanadium oxide according to the first embodiment, the rate of the amount of substance V to the total of the amount of substance V and the amount of substance M, (V/(M + V)), is, for example, exceeding 0% and less than 10%. In such a composition, a mixed phase of a β-phase and a γ-phase is likely to be generated. If the heat-treatment temperature when the lithium vanadium oxide is manufactured is high, the γ-phase is likely to be generated. In addition, a raw material having a low melting point is used as a raw material of the lithium vanadium oxide, a γ-phase is likely to be generated even at a lower heat-treatment temperature. Accordingly, the volume ratio of the β-phase and the γ-phase can be controlled by appropriately selecting the ratio of the amount of substance V to the total of the amount of substance V and the amount of substance M, the heat-treatment temperature at the time of manufacturing the lithium vanadium oxide, and the types of raw materials of the lithium vanadium oxide.

The lithium vanadium oxide according to the first embodiment includes a γ-phase and a γ-phase and has a composition represented by, for example, a compositional formula (1): Li₃₊ₓV₁₋ₓMₓO₄, wherein 0 < x < 1 is satisfied. According to this composition, when a lithium vanadium oxide is used as an active material, Li is easily inserted into and extracted from the active material. Accordingly, the capacity of a battery using the lithium vanadium oxide as an active material is improved. The content x of M may satisfy 0 < x ≤ 0.2. According to this composition, the capacity of a battery including the lithium vanadium oxide as an active material is further improved. The content x of M may be 0 < x < 0.1. According to this composition, the capacity of a battery including the lithium vanadium oxide as an active material is further improved. The content x of M may be 0 < x < 0.08. According to this composition, the capacity of a battery including the lithium vanadium oxide as an active material is further improved.

Li may be excessively contained so as to deviate from the compositional ratio in the compositional formula (1). Specifically, Li may be contained in excess of the compositional ratio of Li in the compositional formula (1) within a range of 30% or less. The excessive Li may be incorporated into the crystal phases of the β-phase and/or γ-phase of the lithium vanadium oxide or may be present in a crystal phase other than the β-phase and/or the γ-phase. According to this composition, the capacity of a battery including the lithium vanadium oxide as an active material is further improved.

M can be selected from tetravalent metal elements excluding V and tetravalent metalloid elements. M is, for example, at least one selected from the group consisting of Ti, Zr, Si, Ge, and Sn. According to this composition, when the lithium vanadium oxide is used as an active material, a high theoretical capacity is easily maintained in the active material. M may include Ti. According to this composition, when the lithium vanadium oxide is used as an active material, a high theoretical capacity is further easily maintained in the active material. M may be Ti. According to this composition, when the lithium vanadium oxide is used as an active material, a high theoretical capacity is further easily maintained in the active material.

The volume ratio of the β-phase and the γ-phase is not particularly limited. Since the volume ratio of the β-phase and the γ-phase correlates to the result of X-ray diffraction measurement of the lithium vanadium oxide, the result of X-ray diffraction measurement can be a measure of the volume ratio of the β-phase and the γ-phase. However, the intensity of a diffraction peak represents the height of the diffraction peak and does not indicate the areas and volumes of the β-phase and the γ-phase. For example, in an X-ray diffraction pattern obtained by using a Cu-Kα ray as the ray source, the ratio of the intensity of a diffraction peak belonging to the (101) plane of the β-phase to the intensity of a diffraction peak belonging to the (011) plane of the γ-phase is 0.1 or more and 10.0 or less. The ratio of intensities of the diffraction peaks may be 0.1 or more and 7.0 or less. When the ratio of the intensities of diffraction peaks is within such a range, a battery exhibiting good charge-discharge behavior can be realized by using the lithium vanadium oxide as an active material in the battery.

The diffraction peak belonging to the (101) plane of the β-phase appears at 22.7°±0.2° when the change in the lattice constant of the β-phase by doping with an M element is considered. Similarly, the diffraction peak belonging to the (011) plane of the γ-phase appears at 22.4°±0.2° when the change in the lattice constant of the γ-phase by doping with an M element is considered. Accordingly, instead of the conditions of the ratio of intensities of the diffraction peaks, in an X-ray diffraction pattern obtained by using a Cu-Kα ray as the ray source, the ratio of the intensity of a diffraction peak appearing at a diffraction angle 2θ of 22.7°±0.2° to the intensity of a diffraction peak appearing in a diffraction angle 2θ range of 22.4°±0.2° may be 0.1 or more and 10.0 or less. When two diffraction peaks are present in an angle range of "22.5° or more and 22.6° or less" where the diffraction angles 2θ of "22.4°±0.2°" and "22.7°±0.2°" overlap each other, the correspondence relation between the diffraction peaks and crystal planes is determined by considering the intensity relationship of other planes of the β-phase and the γ-phase that can be contrasted. A diffraction peak belonging to the (011) plane of the γ-phase tends to appear at 22.4°±0.1°, and a diffraction peak belonging to the (101) phase of the β-phase tends to appear at 22.7°±0.1°. Accordingly, in an X-ray diffraction pattern obtained by using a Cu-Kα ray as the ray source, the ratio of the intensity of a diffraction peak that appears at a diffraction angle 2θ of 22.7°±0.1° to the intensity of a diffraction peak that appears in a diffraction angle 2θ range of 22.4°±0.1° may be 0.1 or more and 10.0 or less. The ratio of intensities of the diffraction peaks may be 0.1 or more and 7.0 or less.

The shape of the lithium vanadium oxide according to the first embodiment is not limited. Examples of the shape are needle, spherical, and oval spherical shapes. The lithium vanadium oxide according to the first embodiment may be a particle or may be formed so as to have a pellet or plate shape.

When the lithium vanadium oxide according to the first embodiment has a particulate shape (e.g., spherical shape), the lithium vanadium oxide may have a median diameter of 0.1 µm or more and 100 µm or less or a median diameter of 0.5 µm or more and 10 µm or less. Consequently, the lithium vanadium oxide according to the first embodiment and other materials can be well dispersed. Here, the median diameter of particles means the particle diameter (d50) corresponding to the 50% accumulated volume in a volume-based particle size distribution. The volume-based particle size distribution can be measured with a laser diffraction measurement apparatus or an image analyzer.

The lithium vanadium oxide of the first embodiment can be contained in a negative electrode active material.

### <Method for manufacturing lithium vanadium oxide>

The lithium vanadium oxide according to the first embodiment can be manufactured by the following method.

Raw material powders are provided so as to give a desired composition. Examples of the raw material powders are an oxide, a hydroxide, a carbonate, a nitrate, or an organic salt of Li; an oxide, a hydroxide, a carbonate, a nitrate, or an organic salt of V; and an oxide, a hydroxide, a carbonate, a nitrate, or an organic salt of M.

As one example, in a lithium vanadium oxide having a composition represented by compositional formula (1): Li₃₊ₓV₁₋ₓMₓO₄, M is Ti, and x at the time of mixing the raw materials is assumed to be 0.05. Li₂CO₃, V₂O₅, and TiO₂ are mixed at a molar ratio of Li₂CO₃:V₂O₅:TiO₂ = (3.05/2):(0.95/2):0.05. Lithium hydroxide or its hydrate may be used instead of Li₂CO₃.

The mixture of the raw material powders is heat-treated to obtain a reaction product. The atmosphere at the time of heat treatment may be an air atmosphere or an inert gas atmosphere. The inert atmosphere is, for example, an argon atmosphere or a nitrogen atmosphere. The raw material mixture may be heat-treated in a reducing atmosphere. The reducing atmosphere is, for example, an ammonia atmosphere, a methane atmosphere, or a hydrogen sulfide atmosphere.

The lithium vanadium oxide may be obtained by mechanochemically reacting a mixture of raw material powders with each other (by a mechanochemical milling method) in a mixing apparatus such as a planetary ball mill. A lithium vanadium oxide according to the first embodiment is obtained by these methods.

Here, the molar ratio at the time of mixing the raw materials and the molar ratio of the rection product are not necessarily the same. This is because raw materials may not be incorporated into the reaction product due to evaporation and so on during the reaction.

Accordingly, the composition x of the lithium vanadium oxide is determined by, for example, ICP optical emission spectrometry, atomic absorption spectrometry, or an electron probe micro analyzer (EPMA) method.

### (Second embodiment)

A second embodiment will now be described. Matters described in the first embodiment will be omitted as appropriate.

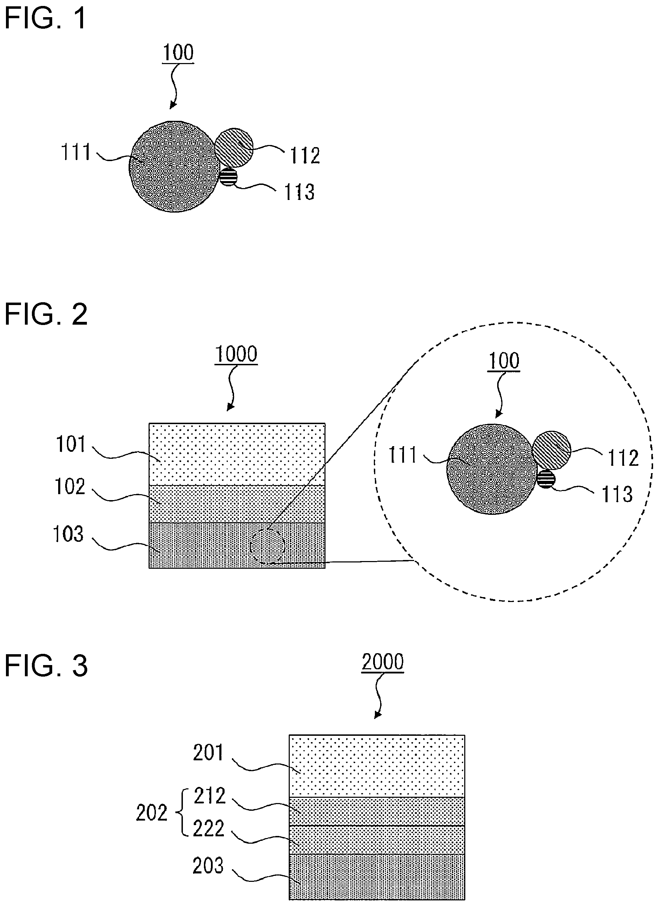

Fig. 1 shows an electrode material 100 according to a second embodiment. The electrode material 100 includes an active material 111 and a solid electrolyte 112. The electrode material 100 may include a conductive assistant 113 for the purpose of enhancing the electron conductivity. The active material 111, the solid electrolyte 112, and the conductive assistant 113 each have, for example, a particulate shape. The active material 111 includes the lithium vanadium oxide of the first embodiment. The lithium vanadium oxide according to the first embodiment is suitable for lowering the coefficient of expansion and contraction of the electrode material 100 and facilitating insertion and extraction of Li in the electrode material 100.

The active material 111 may include the lithium vanadium oxide according to the first embodiment as a main component. The phrase "including the lithium vanadium oxide according to the first embodiment as a main component" means that the component with the highest mass ratio is the lithium vanadium oxide according to the first embodiment. The active material 111 may consist of the lithium vanadium oxide according to the first embodiment.

The conductive assistant 113 may be provided so as to at least partially cover the particle of the active material 111. Consequently, the contact area between a particle of the conductive assistant 113 and a particle of the active material 111 can be enlarged. As a result, when the electrode material 100 is used in a battery, since the resistance of the battery is decreased, the output of the battery can be increased.

The volume ratio of the particle of the conductive assistant 113 to the total of the volume of the particle of the active material 111 and the volume of the particle of the conductive assistant 113 may be 0.01 or more and 0.4 or less.

Since the electrode material 100 according to the second embodiment includes the lithium vanadium oxide according to the first embodiment, a battery having high theoretical capacity and durability can be realized by using the electrode material 100 according to the second embodiment.

The electrode material 100 according to the second embodiment can be contained in a negative electrode.

### (Third embodiment)

A third embodiment will now be described. Matters described in the first embodiment or the second embodiment will be omitted as appropriate.

Fig. 3 shows a battery 1000 that is an example of a third embodiment. The battery 1000 includes a positive electrode 101, an electrolyte layer 102, and a negative electrode 103. The electrolyte layer 102 is disposed between the positive electrode 101 and the negative electrode 103.

The positive electrode 101 contains an active material and a solid electrolyte.

The electrolyte layer 102 contains an electrolyte material. The electrolyte material is, for example, a solid electrolyte material.

The negative electrode 103 contains an active material 111 and a solid electrolyte 112.

The active material 111 of the negative electrode is a particle containing the lithium vanadium oxide according to the first embodiment. The active material 111 of the negative electrode may be a particle containing the lithium vanadium oxide according to the first embodiment as a main component. The phrase "particle containing the lithium vanadium oxide according to the first embodiment as a main component" means a particle in which the component with the highest mass ratio is the lithium vanadium oxide according to the first embodiment. The active material 111 of the negative electrode may be a particle consisting of the lithium vanadium oxide according to the first embodiment.

The active material 111 of the negative electrode may have a median diameter of 0.1 µm or more and 100 µm or less. When the active material 111 of the negative electrode has a median diameter of 0.1 µm or more, the active material 111 and the solid electrolyte 112 can be well dispersed in the negative electrode 103. Consequently, the charge-discharge behavior of the battery are improved. When the active material 111 of the negative electrode has a median diameter of 100 µm or less, the lithium diffusion speed in the active material 111 is improved. Consequently, the battery 1000 can operate at a high output.

The active material 111 of the negative electrode may have a median dimeter larger than that of the solid electrolyte 112. Consequently, the active material 111 and the solid electrolyte 112 can be well dispersed.

In order to improve the energy density and output of the battery 1000, the ratio of the volume of the active material 111 to the total of the volume of the active material 111 and the volume of the solid electrolyte 112 in the negative electrode 103 may be 0.30 or more and 0.95 or less.

In order to improve the energy density and output of the battery 1000, the negative electrode 103 may have a thickness of 10 µm or more and 500 µm or less.

The solid electrolyte 112 contained in the negative electrode 103 may be a sulfide solid electrolyte, a halide solid electrolyte, an oxide solid electrolyte, or a polymer solid electrolyte.

In the present disclosure, the term "sulfide solid electrolyte" means a solid electrolyte containing sulfur. The term "oxide solid electrolyte" means a solid electrolyte containing oxygen. The oxide solid electrolyte may contain an anion (excluding a sulfur anion and a halogen anion) in addition to oxygen. The term "halide solid electrolyte" means a solid electrolyte containing a halogen element and not containing sulfur. The halide solid electrolyte may contain oxygen in addition to a halogen element.

Examples of the sulfide solid electrolyte are Li₂S-P₂S₅, Li₂S-SiS₂, Li₂S-B₂S₃, Li₂S-GeS₂, Li_{3.25}Ge_{0.25}P_{0.75}S₄, and Li₁₀GeP₂S₁₂.

Examples of the halide solid electrolyte are compounds represented by LiₐMe_{b}Y_{c}X₆. Here, a + mb + 3c = 6 and c > 0 are satisfied. Me is at least one selected from the group consisting of metal elements other than Li and Y and metalloid elements. X is at least one element selected from the group consisting of F, Cl, Br, and I. The value of m represents the valence of Me.

The "metalloid elements" are B, Si, Ge, As, Sb, and Te. The "metal elements" are all elements included in Groups 1 to 12 of the periodic table (however, H is excluded) and all elements included in Groups 13 to 16 in the periodic table (however, B, Si, Ge, As, Sb, Te, C, N, P, O, S, and Se are excluded).

In order to enhance the ion conductivity of the halide solid electrolyte, Me may be at least one element selected from the group consisting of Mg, Ca, Sr, Ba, Zn, Sc, Al, Ga, Bi, Zr, Hf, Ti, Sn, Ta, and Nb.

Other examples of the halide solid electrolyte are compound represented by Li_{α'}M_{β}O_{γ}X_{δ}. Here, α, β, γ and δ are all values greater than 0. M is at least one element selected from the group consisting of metal elements other than Li and metalloid elements. X is at least one selected from the group consisting of Cl, Br, and I. In the composition of the compound, 0.9 ≤ α ≤ 1.2, β = 1.0, 1.0 ≤ γ ≤ 1.3, and 3.6 ≤ δ ≤ 4.0 are satisfied.

Examples of the oxide solid electrolyte are:
(i) an NASICON-type solid electrolyte, such as LiTi₂(PO₄)₃ or an element substitute thereof;
(ii) a perovskite-type solid electrolyte, such as (LaLi)TiO₃;
(iii) an LISICON-type solid electrolyte, such as Li₁₄ZnGe₄O₁₆, Li₄SiO₄, LiGeO₄, or an element substitute thereof;
(iv) a gamet-type solid electrolyte, such as Li₇La₃Zr₂O₁₂ or an element substitute thereof; and
(v) Li₃PO₄ or an N-substitute thereof.

Examples of the polymer solid electrolyte are a polymer compound and a compound of a lithium salt. The polymer compound may have an ethylene oxide structure. A polymer compound having an ethylene oxide structure can contain a large amount of a lithium salt and can therefore have a higher ion conductivity. The polymer solid electrolyte may be, for example, polyethylene oxide and a conjugated compound of a lithium salt. An example of such a polymer solid electrolyte is lithium bis(trifluoromethanesulfonyl)imide.

Examples of the lithium salt are LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these salts may be used alone, or a mixture of two or more lithium salts selected from these salts may be used.

The positive electrode 101 contains a material that can occlude and release metal ions such as lithium ions. The positive electrode 101 contains, for example, an active material (e.g., an active material particle).

Examples of the active material of the positive electrode are a lithium-containing transition metal oxide, a transition metal fluoride, a polyanionic material, a fluorinated polyanionic material, a transition metal sulfide, a transition metal oxysulfide, and a transition metal oxynitride. Examples of the lithium-containing transition metal oxide are Li(Ni,Co,Al)O₂, Li(Ni,Co,Mn)O₂, and LiCoO₂.

In the present disclosure, "(A,B,C)" means "at least one selected from the group consisting of A, B, and C".

From the viewpoint of the cost and safety of the battery 1000, lithium phosphate may be used as the active material of the positive electrode.

The active material of the positive electrode may have a median diameter of 0.1 µm or more and 100 µm or less. When the active material of the positive electrode has a median diameter of 0.1 µm or more, the active material and the solid electrolyte can be well dispersed in the positive electrode 101. Consequently, the charge-discharge behavior of the battery 1000 is improved. When the active material of the positive electrode has a median diameter of 100 µm or less, the lithium diffusion speed in the active material of the positive electrode is improved. Consequently, the battery 1000 can operate at a high output.

The active material of the positive electrode may have a median dimeter larger than that of the solid electrolyte. Consequently, the active material and the solid electrolyte of the positive electrode can be well dispersed.

In order to improve the energy density and output of the battery 1000, the ratio of the volume of the active material to the total of the volume of the active material and the volume of the solid electrolyte in the positive electrode 101 may be 0.30 or more and 0.95 or less.

A covering layer may be formed on the surface of the electrode active material. Consequently, an increase in the reaction overvoltage of the battery can be suppressed. Examples of the covering material contained in the covering layer are a sulfide solid electrolyte, an oxide solid electrolyte, a polymer solid electrolyte, and a halide solid electrolyte.

The covering material may be a halide solid electrolyte material or an oxide solid electrolyte material. The halide solid electrolyte material may include F. Consequently, the stability of the covering material at high potentials is improved. Consequently, the battery 1000 has a high charge-discharge efficiency. The oxide solid electrolyte may be lithium niobate or a polyanion material, which exhibits stability even at a high potential. Consequently, the battery 1000 has a high charge-discharge efficiency.

In order to improve the energy density and output of the battery 1000, the positive electrode 101 may have a thickness of 10 µm or more and 500 µm or less.

The solid electrolyte contained in the positive electrode 101 may be a sulfide solid electrolyte, a halide solid electrolyte, an oxide solid electrolyte, a polymer solid electrolyte, or an organic polymer solid electrolyte.

The electrolyte layer 102 contains an electrolyte material. The electrolyte material is, for example, a solid electrolyte material. The electrolyte layer 102 may be a solid electrolyte layer. The solid electrolyte material contained in the electrolyte layer 102 may be a sulfide solid electrolyte, a halide solid electrolyte, or a polymer solid electrolyte.

The electrolyte layer 102 may have a thickness of 1 µm or more and 100 µm or less. When the electrolyte layer 102 has a thickness of 1 µm or more, a short-circuit hardly occurs between the positive electrode 101 and the negative electrode 103. When the electrolyte layer 102 has a thickness of 100 µm or less, the battery 1000 can operate at a high output.

Fig. 3 shows a battery 2000 that is another example of the third embodiment. In the example of Fig. 3, the battery 2000 includes a positive electrode 201, an electrolyte layer 202, and a negative electrode 203. In this example, the electrolyte layer 202 includes an electrolyte layer 212 constituted similarly to the above-described electrolyte layer 102 (hereinafter, referred to as "first electrolyte layer") and an electrolyte layer 222 constituted differently from the electrolyte layer 212 (hereinafter, referred to as "second electrolyte layer"). The second electrolyte layer 222 is disposed between the first electrolyte layer 212 and the negative electrode 203. The positive electrode 201 and the negative electrode 203 are constituted, for example, as in the positive electrode 101 and the negative electrode 103 shown in Fig. 2, respectively.

When the electrolyte layer 202 is composed of the first electrolyte layer 212 and the second electrolyte layer 222, the second electrolyte layer 222 may be made of a solid electrolyte material that is more electrochemically stable than the first electrolyte layer 212. Specifically, the reduction potential of the solid electrolyte material constituting the second electrolyte layer 222 may be lower than the reduction potential of the solid electrolyte material constituting the first electrolyte layer 212. Consequently, the solid electrolyte material contained in the first electrolyte layer 212 can be used without being reduced. As a result, the charge-discharge efficiency of the battery can be improved.

At least one selected from the group consisting of the positive electrode 101, the electrolyte layer 102, and the negative electrode 103 constituting the battery 1000 shown in Fig. 2 may contain a nonaqueous electrolyte solution, a gel electrolyte, or an ionic liquid for the purpose of facilitating the transfer of lithium ions and improving the output characteristics of the battery. At least one selected from the group consisting of the positive electrode 201, the electrolyte layer 202, and negative electrode 203 constituting the battery 2000 shown in Fig. 3 may also contain a nonaqueous electrolyte solution, a gel electrolyte, or an ionic liquid

The nonaqueous electrolyte solution includes a nonaqueous solvent and a lithium salt dissolved in the nonaqueous solvent. Examples of the nonaqueous solvent are a cyclic carbonate solvent, a chain carbonate solvent, a cyclic ether solvent, a chain ether solvent, a cyclic ester solvent, a chain ester solvent, and a fluorine solvent. Examples of the cyclic carbonate solvent are ethylene carbonate, propylene carbonate, and butylene carbonate. Examples of the chain carbonate solvent are dimethyl carbonate, ethyl methyl carbonate, and diethyl carbonate. Examples of the cyclic ether solvent are tetrahydrofuran, 1,4-dioxane, and 1,3-dioxolane. Examples of the chain ether solvent are 1,2-dimethoxyethane and 1,2-diethoxyethane. An example of the cyclic ester solvent is γ-butyrolactone. An example of the chain ester solvent is methyl acetate.

Examples of the fluorine solvent are fluoroethylene carbonate, methyl fluoropropionate, fluorobenzene, fluoroethyl methyl carbonate, and fluorodimethylene carbonate. One nonaqueous solvent selected from these solvents may be used alone. Alternatively, a mixture of two or more nonaqueous solvents selected from these solvents may be used.

Examples of the lithium salt are LiPF₆, LiBF₄, LiSbF₆, LiAsF₆, LiSO₃CF₃, LiN(SO₂CF₃)₂, LiN(SO₂C₂F₅)₂, LiN(SO₂CF₃)(SO₂C₄F₉), and LiC(SO₂CF₃)₃. One lithium salt selected from these salts may be used alone. Alternatively, a mixture of two or more lithium salts selected from these salts may be used. The concentration of the lithium salt is, for example, in a range of 0.5 mol/L or more and 2 mol/L or less.

As the gel electrolyte, a polymer material impregnated with a nonaqueous electrolyte solution can be used. Examples of the polymer material are polyethylene oxide, polyacrylonitrile, polyvinylidene fluoride, polymethyl methacrylate, and a polymer having an ethylene oxide bond.

Examples of the cation contained in the ionic liquid are:
(i) an aliphatic chain quaternary salt, such as tetraalkylammonium and tetraalkylphosphonium;
(ii) an alicyclic ammonium, such as a pyrrolidinium, a morpholinium, an imidazolinium, a tetrahydropyrimidinium, a piperazinium, and a piperidinium; and
(iii) a nitrogen-containing heterocyclic aromatic cation, such as a pyridinium and an imidazolium.

Examples of the anion contained in the ionic liquid are PF₆⁻, BF₄⁻, SbF₆⁻, AsF₆⁻, SO₃CF₃⁻, N(SO₂CF₃)₂⁻, N(SO₂C₂F₅)₂⁻, N(SO₂CF₃)(SO₂C₄F₉)⁻, and C(SO₂CF₃)₃⁻.

The ionic liquid may contain a lithium salt.

At least one selected from the group consisting of the positive electrode 101, the electrolyte layer 102, and the negative electrode 103 constituting the battery 1000 shown in Fig. 2 may contain a binder for the purpose of improving the adhesion between individual particles. At least one selected from the group consisting of the positive electrode 201, the electrolyte layer 202, and the negative electrode 203 constituting the battery 2000 shown in Fig. 3 may also contain a binder.

Examples of the binder are polyvinylidene fluoride, polytetrafluoroethylene, polyethylene, polypropylene, an aramid resin, polyamide, polyimide, polyamideimide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polyether sulfone, hexafluoropolypropylene, styrene butadiene rubber, and carboxymethyl cellulose. A copolymer can also be used as the binder. Examples of such a binder are copolymers each composed of two or more materials selected from the group consisting of tetrafluoroethylene, hexafluoroethylene, hexafluoropropylene, perfluoroalkyl vinyl ether, vinylidene fluoride, chlorotrifluoroethylene, ethylene, propylene, pentafluoropropylene, fluoromethyl vinyl ether, acrylic acid, and hexadiene. A mixture of two or more selected from these materials may be used.

The negative electrode 103 constituting the battery 1000 shown in Fig. 2 may include a conductive assistant 113 for the purpose of enhancing the electron conductivity. The negative electrode 203 constituting the battery 2000 shown in Fig. 3 may also include a conductive assistant.

Examples of the conductive assistant are:
(i) graphite, such as natural graphite and artificial graphite;
(ii) carbon black, such as acetylene black and Ketjen black;
(iii) conductive fibers, such as carbon fibers and metal fibers;
(iv) carbon fluoride;
(v) metal powders, such as aluminum;
(vi) conductive whiskers, such as zinc oxide and potassium titanate;
(vii) a conductive metal oxide, such as titanium oxide; and
(viii) a conductive polymer compound, such as polyaniline, polypyrrole, and polythiophene.
In order to reduce the cost, the conductive assistant of the above (i) or (ii) may be used.

The positive electrode 101 constituting the battery 1000 shown in Fig. 2 may include not only an active material but also a conductive assistant. Examples of the material of the conductive assistant are as mentioned above. The positive electrode 201 constituting the battery 2000 shown in Fig. 3 may also include not only an active material but also a conductive assistant.

In the negative electrode 103 of the battery 1000 shown in Fig. 2, the conductive assistant 113 may at least partially cover the surface of the active material 111. Consequently, the contact area between the conductive assistant 113 and the active material 111 can be enlarged. As a result, the battery resistance is decreased, and the output can be increased. The negative electrode 203 of the battery 2000 shown in Fig. 3 may be also constituted as in above. In also the positive electrode 101 shown in Fig. 2, the conductive assistant may at least partially cover the surface of the active material. The positive electrode 201 of the battery 2000 shown in Fig. 3 may also be constituted as in above.

In the negative electrode 103 of the battery 1000 shown in Fig. 2, the ratio of the volume of the conductive assistant 113 to the total of the volume of the active material 111 and the volume of the conductive assistant 113 may be 0.01 or more 0.4 or less. The negative electrode 203 of the battery 2000 shown in Fig. 3 may also be constituted as in above. In also the positive electrode 101 of the battery 1000 shown in Fig. 2, the ratio of the volume of the conductive assistant to the total of the volume of the active material and the volume of the conductive assistant may be 0.01 or more and 0.4 or less. The positive electrode 201 of the battery 2000 shown in Fig. 3 may also be constituted as in above.

The electrode material 100 shown in Fig. 1 may be contained in the negative electrode 103 shown in Fig. 2. When the electrode material 100 is contained in the negative electrode 103, a covering layer may be formed on the surface of the active material 111 in order to prevent the solid electrolyte 112 from reacting with the active material 111. Consequently, the battery has a high charge-discharge efficiency. Similarly, the electrode material 100 shown in Fig. 1 may be contained in the negative electrode 203 of the battery 2000 shown in Fig. 3. In the battery 2000 shown in Fig. 3, a covering layer may be formed on the surface of the active material of the negative electrode.

Examples of the covering material contained in the covering layer are a sulfide solid electrolyte, an oxide solid electrolyte, a polymer solid electrolyte, and a halide solid electrolyte.

An example of the sulfide solid electrolyte is Li₂S-P₂S₅. An example of the oxide solid electrolyte is trilithium phosphate. Examples of the polymer solid electrolyte are polyethylene oxide and a conjugated compound of a lithium salt. An example of such polymer solid electrolyte is lithium bis(trifluoromethanesulfonyl)imide.

Examples of the shape of the battery according to the third embodiment are a coin type, a cylindrical type, a square type, a sheet type, a button type, a flat type, and a stacked type.

The battery according to the third embodiment may be produced by, for example, providing a material for forming a positive electrode, a material for forming an electrolyte layer, and a material for forming a negative electrode and producing a laminate composed of a positive electrode, an electrolyte layer, and a negative electrode in this order by a known method.

### (Other embodiments)

### (Additional remark)

According to the description of the above embodiments, the following technologies are disclosed.

### (Technology 1)

A lithium vanadium oxide comprising Li, V, M, and O, wherein
M is at least one selected from tetravalent metal elements excluding V and tetravalent metalloid elements, and
the lithium vanadium oxide includes both a β-phase and a γ-phase as crystal phases.

According to the present disclosure, the lithium vanadium oxide includes both a β-phase and a γ-phase as crystal phases, and thereby a battery including the lithium vanadium oxide as an active material can achieve both capacity and durability.

### (Technology 2)

The lithium vanadium oxide according to technology 1, having a composition represented by Li₃₊ₓV₁₋ₓMₓO₄, wherein 0 < x < 1 is satisfied. According to such a constitution, the capacity of a battery including the lithium vanadium oxide as an active material is improved.

### (Technology 3)

The lithium vanadium oxide according to technology 2, wherein 0 < x ≤ 0.2 is satisfied. According to such a constitution, the capacity of a battery including the lithium vanadium oxide as an active material is further improved.

### (Technology 4)

The lithium vanadium oxide according to any one of technologies 1 to 3, wherein M includes Ti. According to such a constitution, when the lithium vanadium oxide is used as an active material, the active material can easily maintain a high theoretical capacity.

### (Technology 5)

The lithium vanadium oxide according to any one of technologies 1 to 4, wherein in an X-ray diffraction pattern obtained by using a Cu-Kα ray as a ray source, a ratio of an intensity of a diffraction peak belonging to a (101) plane of the β-phase to an intensity of a diffraction peak belonging to a (011) plane of the γ-phase is 0.1 or more and 10.0 or less. According to such a constitution, a battery exhibiting good charge-discharge behavior can be realized by using the lithium vanadium oxide as an active material of the battery.

### (Technology 6)

The lithium vanadium oxide according to any one of technologies 1 to 4, wherein in an X-ray diffraction pattern obtained by using a Cu-Kα ray as a ray source, a ratio of an intensity of a diffraction peak appearing at a diffraction angle 2θ of 22.7°±0.2° to an intensity of a diffraction peak appearing in a diffraction angle 2θ range of 22.4°±0.2° is 0.1 or more and 10.0 or less. According to such a constitution, a battery exhibiting good charge-discharge behavior can be realized by using the lithium vanadium oxide as an active material of the battery.

### (Technology 7)

A negative electrode active material comprising the lithium vanadium oxide according to any one of technologies 1 to 6. According to such a constitution, the negative electrode active material includes both a β-phase and a γ-phase as crystal phases, and thereby a battery achieving both capacity and durability can be obtained.

### (Technology 8)

A battery comprising a positive electrode, a negative electrode including the negative electrode active material according to technology 7; and an electrolyte disposed between the positive electrode and the negative electrode. According to such a constitution, the negative electrode active material includes both a β-phase and a γ-phase as crystal phases, and thereby a battery achieving both capacity and durability can be obtained.

### (Technology 9)

The battery according to technology 8, wherein the negative electrode includes a conductive assistant. According to such a constitution, the negative electrode includes a conductive assistant, and thereby the conductivity of the negative electrode can be improved.

### EXAMPLES

The details of the present disclosure will now be described using Examples and Comparative Examples. The lithium vanadium oxide, the negative electrode active material, and the battery are not limited to the following Examples.

### <Example 1>

### [Production of lithium vanadium oxide]

The lithium vanadium oxide of Example 1 was produced as follows. As raw material powders, Li₂CO₃ (manufactured by Kojundo Chemical Lab. Co., Ltd., purity: 99.9%), V₂O₅ (manufactured by Kojundo Chemical Lab. Co., Ltd., purity: 99.9%), and TiO₂ (manufactured by Kojundo Chemical Lab. Co., Ltd., purity: 99.9%) were provided at a molar ratio of Li₂CO₃:V₂O₅:TiO₂ = 1.525:0.475:0.05. However, Li₂CO₃ was provided in an excess of 10 mass% relative to the above composition. That is, Li₂CO₃ was provided in an amount that was 10 mass% in excess of the mass of Li₂CO₃ whose molar ratio was determined as above. These raw material powders were mixed in a mortar to obtain a powder mixture. The obtained powder mixture was subjected to pre-heat-treatment in the atmosphere at 600°C for 3 hours. The obtained pre-heat-treated powder was subjected to main-heat-treatment in the atmosphere at 965°C for 15 hours. Here, the temperature was increased at an average rate of 5°C/min and was decreased at an average rate of 3°C/min. Consequently, a lithium vanadium oxide of Example 1 was obtained.

### <Example 2>

A lithium vanadium oxide of Example 2 was produced in the same manner as in Example 1 except that the temperature in the main-heat-treatment was changed to 900°C.

### <Example 3>

Li₂CO₃, V₂O₅, and TiO₂ as raw material powders were provided at a molar ratio of Li₂CO₃:V₂O₅:TiO₂ = 1.525:0.475:0.05. However, Li₂CO₃ was further provided in an amount that was 3 mass% in excess of the mass of Li₂CO₃ whose molar ratio was determined as above. These raw material powders were mixed, and the obtained powder mixture was subjected to pre-heat-treatment in the same manner as in Example 1 and was then subjected to main-heat-treatment at 800°C for 15 hours in the atmosphere. Thus, a lithium vanadium oxide of Example 3 was produced.

### <Comparative Example 1>

Li₂CO₃ and V₂O₅ as raw material powders were provided at a molar ratio of Li₂CO₃:V₂O₅ = 1.5:0.5. However, Li₂CO₃ was further provided in an amount that was 3 mass% in excess of the mass of Li₂CO₃ whose molar ratio was determined as above. These raw material powders were mixed, and the obtained powder mixture was subjected to pre-heat-treatment in the same manner as in Example 1 and was then subjected to main-heat-treatment at 800°C for 15 hours in the atmosphere. Thus, a lithium vanadium oxide of Comparative Example 1 was produced.

### <Comparative Example 2>

A lithium vanadium oxide of Comparative Example 2 was produced in the same manner as in Example 1 except that the molar ratio of the raw material powders was changed to Li₂CO₃:V₂O₅:TiO₂ = 1.55:0.45:0.10.

### [X-ray diffraction measurement]

X-ray diffractions of the lithium vanadium oxides of Example 1, Comparative Example 1, and Comparative Example 2 were measured in dry atmosphere having a dew point of -45°C or less using an X-ray diffractometer (manufactured by Rigaku Corporation, MiniFlex 600). As the X-ray source, Cu-Kα rays (wavelength: 1.5405 angstrom and 1.5444 angstrom) were used.

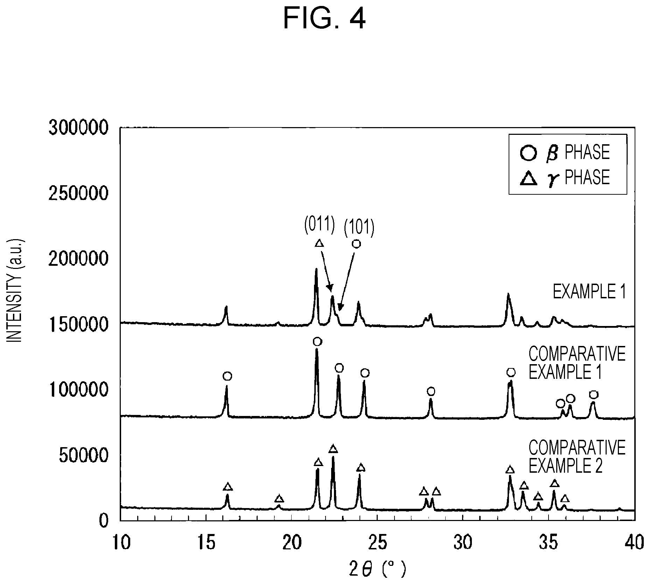

Fig. 4 is a graph showing X-ray diffraction patterns of Example 1, Comparative Example 1, and Comparative Example 2. As shown in Fig. 4, the diffraction pattern of the lithium vanadium oxide of Example 1 included both a diffraction peak belonging to a crystal plane of the β-phase and a diffraction peak belong to a crystal plane of the γ-phase. Although it is not shown in Fig. 4, as in Example 1, the diffraction patterns of the lithium vanadium oxides of Example 2 and Example 3 each had both a diffraction peak belonging to a crystal plane of the β-phase and a diffraction peak belonging to a crystal plane of the γ-phase. That is, the lithium vanadium oxides in Examples 1 to 3 each included a β-phase and a γ-phase as crystal phases.

In the diffraction peak obtained from the lithium vanadium oxide according to Example 1, the ratio of the intensity of a diffraction peak belonging to a (011) plane of the γ-phase appearing at 2θ = 22.7° to the intensity of a diffraction peak belonging to a (101) plane of the γ-phase appearing at 2θ = 22.4°, the I(β-phase)/I(γ-phase) value, was 0.41. In the diffraction peak obtained from the lithium vanadium oxide of Example 2, the I(β-phase)/I(γ-phase) value was 0.83. In the diffraction peak obtained from the lithium vanadium oxide of Example 3, the I(β-phase)/I(γ-phase) value was 2.28.

As shown in Fig. 4, the diffraction pattern of the lithium vanadium oxide of Comparative Example 1 included only a diffraction peak belonging to a crystal plane of the β-phase. That is, the lithium vanadium oxide of Comparative Example 1 included only a β-phase. The diffraction pattern of the lithium vanadium oxide of Comparative Example 2 included only a diffraction peak belonging to a crystal plane of the γ-phase. That is, the lithium vanadium oxide of Comparative Example 2 included only a γ-phase.

### [Analysis by ICP emission spectrometry]

The composition ratio of Ti in the lithium vanadium oxide according to Example 1 was analyzed by ICP emission spectrometry. In the analysis, an ICP optical emission spectrometer (manufactured by Hitachi Hogh-Tech Corporation, PS3520VDDII) was used. In the lithium vanadium oxide of Example 1, x in the compositional formula (1) was 0.05. The composition ratios of Ti in the lithium vanadium oxides according to Example 2, Example 3, and Comparative Example 2 were analyzed by the same method as in Example 1. In the lithium vanadium oxides of Example 2 and Example 3, x in the compositional formula (1) was 0.05. In the lithium vanadium oxide of Comparative Example 2, x in the compositional formula (1) was 0.1. Table 1 shows the theoretical capacities of active materials when the lithium vanadium oxides calculated from the compositions of Examples 1 to 3 and Comparative Examples 1 and 2 were used as the active materials.

### [Production of negative electrode]

As a solid electrolyte, Li₃PS₄ (hereinafter, referred to as "LPS") was provided. As a negative electrode active material, the lithium vanadium oxide according to Example 1 was prepared. LPS, the negative electrode active material, a conductive assistant, a binder-containing solvent, and an organic solvent were put in a polypropylene container, and these materials were stirred with an ultrasonic homogenizer. The negative electrode slurry was applied to current collector foil to form a coating film. The current collector foil provided with the coating film was disposed on a hot plate, and the organic solvent was removed from the coating film in an argon atmosphere. Consequently, a negative electrode was obtained. The negative electrode was dried by pre-drying at 70°C for 20 minutes and then main-drying at 110°C for 30 minutes.

### [Production of positive electrode]

As a solid electrolyte, LPS was provided. As a positive electrode active material, lithium nickel cobalt aluminum oxide (hereinafter, referred to as "NCA") was provided. LPS, NCA, a conductive assistant, a binder-containing solvent, and an organic solvent were put in a polypropylene container, and these materials were stirred with an ultrasonic homogenizer. The positive electrode slurry was applied to current collector foil to form a coating film. The current collector foil provided with the coating film was disposed on a hot plate, and the organic solvent was removed from the coating film in an argon atmosphere. Consequently, a positive electrode was obtained. The positive electrode was dried by pre-drying at 70°C for 20 minutes and then main-drying at 120°C for 30 minutes.

### [Production of secondary battery]

A sulfide solid electrolyte Li₂S-P₂S₅ in an amount (80 mg) corresponding to a thickness of 550 µm and a positive electrode were stacked in this order in an insulating outer cylinder. The positive electrode was produced as described above, then punched out into a size of 9.2 mm in diameter, and stacked on the sulfide solid electrolyte material. Subsequently, a negative electrode was stacked on the solid electrolyte layer on the side opposite to the side in contact with the positive electrode. The negative electrode was produced as described above, then punched out into a size of 9.2 mm in diameter, and stacked on the solid electrolyte layer. The positive electrode and the negative electrode were combined such that the theoretical capacity of the negative electrode is 1.2 times the theoretical capacity of the positive electrode. The films stacked in the above order were pressure molded at a pressure of 80 MPa to produce a laminate consisting of a positive electrode, a solid electrolyte layer, and a negative electrode.

Subsequently, stainless steel current collectors were attached to the positive electrode and the negative electrode, respectively, and current collector leads were attached to the current collectors, respectively.

Finally, the inside of the insulating outer cylinder was isolated from the outer atmosphere using an insulating ferrule, and the inside of the cylinder was sealed. As described above, a battery of Example 1 was produced. Batteries of Example 2, Example 3, Comparative Example 1, and Comparative Example 2 were produced by the same method as in Example 1.

### [Charge-discharge test]

The batteries of Examples 1 to 3 and Comparative Examples 1 and 2 were each disposed in a thermostat maintained at 25°C. The batteries were each charged at a constant current of 0.05 C rate (20-hour rate) with respect to the theoretical capacity of the battery. The charging end voltage was 3.6 V. Subsequently, each battery was discharged at a current value of 0.05 C rate until the voltage reached 1.0 V. Charge and discharge at 0.05 C rate were repeated twice, and a durability test was then implemented. In the durability test, charge and discharge were implemented 100 cycles at a current value of 1 C (1-hour rate) as the C rate condition.

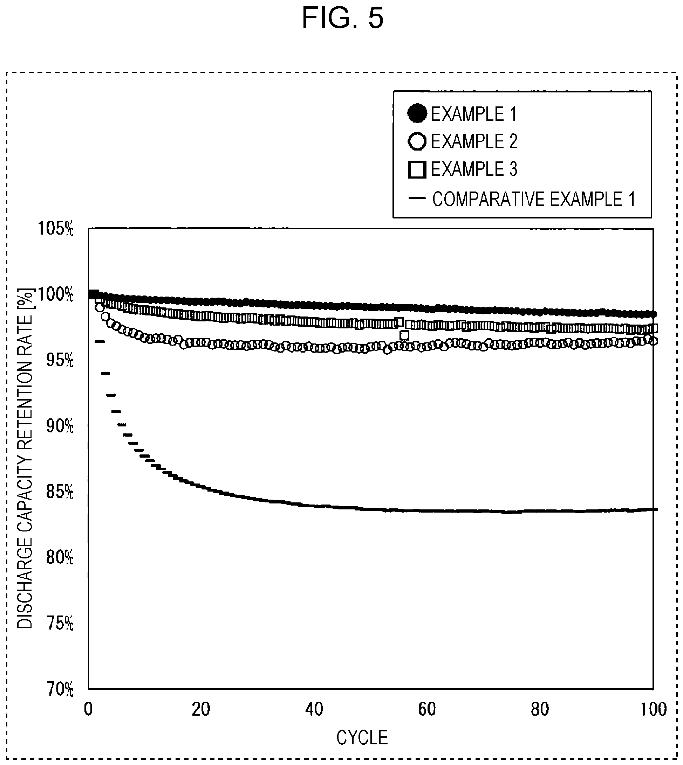

Fig. 5 shows discharge capacity retention rate in 100 cycles in the batteries of Examples 1 to 3 and Comparative Example 1. Table 1 shows the discharge capacity retention rate after 100 cycles in batteries of Examples 1 to 3 and Comparative Example 1. Here, the "discharge capacity retention rate after 100 cycles" means the ratio of the discharge capacity at the 100th cycle to the discharge capacity at the 1st cycle of the charge-discharge.

**[Table 1]**

| | Composition | Theoretical capacity (mAh/g) | β/γ ratio | Discharge capacity retention rate after 100 cycles (%) |
|---|---|---|---|---|
| Example 1 | Li_{3.05}Ti_{0.05}V_{0.95}O₄ | 384 | 0.41 | 98.5 |
| Example 2 | Li_{3.05}Ti_{0.05}V_{0.95}O₄ | 384 | 0.83 | 96.0 |
| Example 3 | Li_{3.05}Ti_{0.05}V_{0.95}O₄ | 384 | 2.28 | 97.4 |
| Comparative Example 1 | Li₃VO₄ | 394 | β single-phase | 83.6 |
| Comparative Example 2 | Li_{3.1}Ti_{0.1}V_{0.9}O₄ | 374 | γ single-phase | No data due to low capacity |

### (Consideration)

As shown in results of Examples 1 to 3, a negative electrode active material composed of a lithium vanadium oxide including a β-phase and a γ-phase was obtained, while maintaining a high theoretical capacity, by doping Ti. The negative electrode active material composed of the lithium vanadium oxide of Example 3 had a high β/γ ratio and exhibited a mixed phase state with a dominant β-phase. Nevertheless, the battery of Example 3 showed a high discharge capacity retention rate.

The negative electrode active material composed of the lithium vanadium oxide of Comparative Example 1 included a β-phase only. Accordingly, the battery of Comparative Example 1 had a low discharge capacity retention rate. As shown by the results of Comparative Example 2, it is possible to produce a γ single-phase by increasing the rate of the amount of substance V to the total of the amount of substance V and the amount of substance M until 10%. However, since an increase in the amount of substance Ti significantly decreases the theoretical capacity, the advantages of the lithium vanadium oxide may not be fully utilized.

As described above, the lithium vanadium oxide of the present disclosure is suitable for providing a battery that can achieve both capacity and durability.

### Industrial Applicability

The lithium vanadium oxide of the present disclosure can be used, for example, as an active material in a lithium ion secondary battery.

### Reference Signs List

100 electrode material
111 active material
112 solid electrolyte
113 conductive assistant
101, 201 positive electrode
102, 202 electrolyte layer
103, 203 negative electrode
212 first electrolyte layer
222 second electrolyte layer
1000, 2000 battery

## Claims

1. A lithium vanadium oxide comprising Li, V, M, and O, wherein
M is at least one selected from tetravalent metal elements excluding V and tetravalent metalloid elements, and
the lithium vanadium oxide includes both a β-phase and a γ-phase as crystal phases.

2. The lithium vanadium oxide according to claim 1, having a composition represented by Li₃₊ₓV₁₋ₓMₓO₄, wherein
0 < x < 1 is satisfied.

3. The lithium vanadium oxide according to claim 2, wherein
0 < x ≤ 0.2 is satisfied.

4. The lithium vanadium oxide according to claim 1, wherein
M includes Ti.

5. The lithium vanadium oxide according to claim 1, wherein
in an X-ray diffraction pattern obtained by using a Cu-Kα ray as a ray source, a ratio of an intensity of a diffraction peak belonging to a (101) plane of the β-phase to an intensity of a diffraction peak belonging to a (011) plane of the γ-phase is 0.1 or more and 10.0 or less.

6. The lithium vanadium oxide according to claim 1, wherein
in an X-ray diffraction pattern obtained by using a Cu-Kα ray as a ray source, a ratio of an intensity of a diffraction peak appearing at a diffraction angle 2θ of 22.7°±0.2° to an intensity of a diffraction peak appearing in a diffraction angle 2θ range of 22.4°±0.2° is 0.1 or more and 10.0 or less.

7. A negative electrode active material comprising:
the lithium vanadium oxide according to any one of claims 1 to 6.

8. A battery comprising:
a positive electrode;
a negative electrode including the negative electrode active material according to claim 7; and
an electrolyte disposed between the positive electrode and the negative electrode.

9. The battery according to claim 8, wherein
the negative electrode includes a conductive assistant.
